# FASCICULE DE BREVET EUROPEEN

(11) **EP 2 441 949 B1**
(45) Date de publication et mention de la délivrance du brevet: **13.11.2019**
(21) Numéro de dépôt: 11182179.9
(22) Date de dépôt: 21.09.2011
(51) Int. Cl.: F02N 11/08, B60K 6/485, F02D 41/04, F16H 7/02, B60W 20/50, F02N 11/00, F02D 41/00

(54) **Procédé de détection d'un glissement d'une courroie d'accessoires**
Verfahren zum Erkennen des Durchrutschens eines Aggregate-Antriebsriemens
Method for detecting the slipping of an accessory belt

(30) Priorité: 12.10.2010 FR 1058254
(43) Date de publication de la demande: 18.04.2012
(73) Titulaire: PSA Automobiles SA, 78300 Poissy (FR)
(72) Inventeur: Grisi, Fabrice, 92250 LA GARENNE COLOMBES (FR); Armand, Romain, 92700 COLOMBES (FR)
(74) Mandataire: Ménès, Catherine

(56) Documents cités:
- EP-A1- 2 075 444
- JP-A- 58 206 843
- US-A1- 2004 206 325
- US-A1- 2007 200 522

## Description

L'invention concerne un procédé de détection d'un glissement d'une courroie d'accessoires. L'invention concerne également un procédé de commande de l'arrêt d'un moteur thermique. L'invention concerne par ailleurs un support d'enregistrement et un ensemble de détection pour la mise en œuvre de ce procédé. L'invention concerne enfin un véhicule équipé de cet ensemble.

L'invention s'applique en particulier aux véhicules hybrides. Par « véhicule hybride » on désigne un véhicule dont le moteur (groupe motopropulseur) comporte un moteur thermique et une machine électrique chacun apte à fournir un couple sur un arbre de sortie d'un vilebrequin de manière à entraîner en rotation des roues motrices du véhicule.

Parmi ces véhicules hybrides, les véhicules intégrant un système de mise en veille du moteur thermique (plus connu sous le nom de technologie « Stop and Start ») permettent d'optimiser la consommation d'un véhicule en stoppant le fonctionnement du moteur thermique lorsque le véhicule est à l'arrêt et en redémarrant ce moteur thermique, par exemple, lorsque le conducteur du véhicule relâche la pression sur la pédale de frein. Le redémarrage du véhicule peut prendre la forme d'un démarrage initial, ou d'un démarrage assisté.

Par «démarrage initial» on désigne un démarrage du moteur durant lequel la rotation de l'arbre de sortie de vilebrequin est initiée par la rotation d'un arbre de sortie d'un démarreur. Par «démarrage assisté» on désigne un démarrage du moteur durant lequel la rotation de l'arbre de sortie du vilebrequin est initié par la rotation d'un arbre de sortie d'un alternateur.

La mise en œuvre d'un démarrage assisté est connu en soi. Typiquement, l'alternateur entraîne en rotation l'arbre de sortie du vilebrequin par le biais d'une courroie d'accessoires jusqu'à atteindre un régime du moteur prédéterminé. Une fois ce régime du moteur établi, un calculateur commande une injection maximale de carburant dans des chambres de combustion du moteur thermique puis régule l'injection pour que le régime du moteur thermique se stabilise. Dès lors, l'alternateur cesse d'entraîner en rotation l'arbre de sortie du vilebrequin et le moteur thermique fonctionne de manière autonome.

Dans cette description, on désigne par « régime du moteur » une vitesse de rotation de l'arbre de sortie de vilebrequin, par exemple, exprimée en tours par minute.

Lors d'un démarrage assisté, la transmission de mouvement entre l'arbre de sortie d'alternateur et l'arbre de sortie de vilebrequin est généralement réalisé par adhérence entre la courroie d'accessoires et des poulies de l'arbre de sortie de vilebrequin et de l'arbre de sortie de l'alternateur. A cet effet, des courroies d'accessoires communément utilisées sont les courroies plates dépourvues de crans ou de dents.

Lorsque la courroie d'accessoires est humide, il est fréquent que l'adhérence entre la courroie d'accessoires et les poulies soit insuffisante, en particulier, lors de fortes pluies ou lors d'un passage d'un gué. Ainsi, dans ces conditions quand le moteur procède à un démarrage assisté, la poulie de l'arbre d'alternateur patine contre la courroie d'accessoires et l'alternateur ne parvient pas à mettre en œuvre un démarrage assisté.

Afin de détecter un glissement d'une courroie d'accessoires, des procédés de détection connus du déposant (voir par exemple US 2007/0200522 A1) comporte:
a) la détermination d'un régime du moteur et d'un régime de l'alternateur,
b) la comparaison des régimes déterminés du moteur et de l'alternateur, et
c) la détection du glissement de la courroie d'accessoires en fonction d'un résultat de cette comparaison.

Dans cette description, on désigne par « régime de l'alternateur » une vitesse de rotation de l'arbre de sortie de l'alternateur, par exemple exprimée en tours par minute.

Les étapes a), b) et c) des procédés connus du déposant sont mises en œuvre lors du fonctionnement du moteur thermique. Dans cette description, on considère qu'un moteur thermique est en fonctionnement lorsque les injections de carburant et d'air d'admission dans les chambres de combustion sont non nulles.

De façon connue, le fonctionnement d'un moteur thermique comprend l'alternance de compression (piston au point mort bas dans des cylindres du moteur) et de détente (piston au point mort haut dans les cylindres). Ceci se traduit par une alternance de couples positifs (le moteur fournit un travail mécanique apporté par une combustion) et de couples négatifs (le moteur consomme un travail mécanique utilisé pour la compression). Cette alternance de couples engendre un acyclisme, qui se traduit par un régime du moteur non constant.

Dans les procédés de détection connus du déposant, la mesure du régime du moteur est réalisée à une fréquence largement supérieure à la fréquence à laquelle est mesuré le régime de l'alternateur (la différence de fréquence est de l'ordre d'un facteur 100). Lors du fonctionnement du moteur thermique, le régime du moteur n'étant pas constant, si les mesures de régime du moteur et de régime de l'alternateur ne sont pas réalisées de manière synchrone, le résultat de la détection du glissement est peu fiable.

Par ailleurs, lors du fonctionnement du moteur thermique, le régime de l'alternateur est généralement élevé (supérieur à 1500 tours/min). Dans ces conditions, puisque la puissance électrique produite par l'alternateur est sensiblement constante, un régime élevé se traduit pas un couple sur l'arbre de sortie de l'alternateur faible. Lorsque le couple est faible, cela limite voire supprime les glissements de la courroie. Aussi, dans les procédés de détection connus du déposant les conditions de détection d'un glissement ne sont pas optimales.

Le document EP 2 075 444 A1 divulgue une phase de préparation d'un arrêt d'un moteur thermique.

L'invention vise à résoudre un ou plusieurs de ces inconvénients.

L'invention porte ainsi sur un procédé de détection d'un glissement d'une courroie d'accessoires accouplant en rotation un arbre de sortie d'un vilebrequin d'un moteur thermique avec un arbre de sortie d'un alternateur, dans lequel les étapes a), b) et c) sont réalisées lors d'une phase de préparation d'un arrêt du moteur thermique pendant laquelle l'injection de carburant dans les chambres de combustion est maintenue tout en fermant l'arrivée d'air d'admission dans ces chambres.

Lors de la phase d'arrêt moteur, le régime moteur de l'alternateur est faible. Ainsi, durant cette phase le couple sur l'arbre de sortie d'alternateur est important. En particulier, ce couple est suffisamment important pour provoquer un glissement de la courroie d'accessoires si celle-ci est humide. Il est donc plus facile de détecter un glissement de la courroie durant cette phase d'arrêt.

De plus, lors de la phase d'arrêt moteur, l'acyclisme du moteur est minimisé. En effet, puisque l'admission d'air est fermée, les explosions à l'intérieur des cylindres sont moins violentes et les accélérations des pistons moins brusques. Le régime du moteur thermique est donc plus constant ce qui limite les erreurs lorsqu'il est comparé au régime de l'arbre de l'alternateur qui est échantillonné à une fréquence moindre.

Les modes de réalisation de ce procédé peuvent comporter la caractéristique suivante :
- le procédé est répété systématiquement avant chaque arrêt du véhicule.

L'invention concerne également un procédé de commande de l'arrêt d'un moteur thermique comportant :
- un procédé de détection d'un glissement de la courroie d'accessoires conforme à l'une quelconque des revendications 1 à 2, et
- si un glissement de la courroie d'accessoires est détecté alors l'arrêt du moteur thermique n'est pas commandé, et
- si un glissement de la courroie d'accessoires n'est pas détecté alors l'arrêt du moteur thermique est commandé.

L'invention concerne également un ensemble pour la détection d'un glissement d'une courroie d'accessoires accouplant en rotation un arbre de sortie d'un vilebrequin d'un moteur thermique et un arbre de sortie d'un alternateur, cet ensemble comportant:
- des capteurs pour mesurer ou estimer le régime du moteur et le régime de l'alternateur, et
- un calculateur programmé pour :
   b) comparer le régime du moteur et le régime de l'alternateur mesurés ou estimé par les capteurs, et
   c) détecter le glissement de la courroie d'accessoires en fonction d'un résultat de cette comparaison, le calculateur étant programmé pour mettre en œuvre les étapes b) et c) lors d'une phase de préparation d'un arrêt du moteur thermique pendant laquelle l'injection de carburant dans des chambres de combustion est maintenue tout en fermant l'arrivée d'air d'admission dans ces chambres.

L'invention concerne enfin un véhicule équipé de cet ensemble.

D'autres caractéristiques et avantages de l'invention ressortiront clairement de la description qui en est faite ci-après, à titre indicatif et nullement limitatif, en référence aux dessins annexés, dans lesquels :
- la figure 1 est une illustration schématique d'un véhicule automobile équipé d'un ensemble de détection d'un glissement d'une courroie d'accessoires, et
- la figure 2 est un organigramme d'un procédé de détection d'un glissement de la courroie d'accessoires du véhicule de la figure 1.

Dans la suite de cette description, les caractéristiques et fonctions bien connues de l'homme du métier ne sont pas décrites en détail.

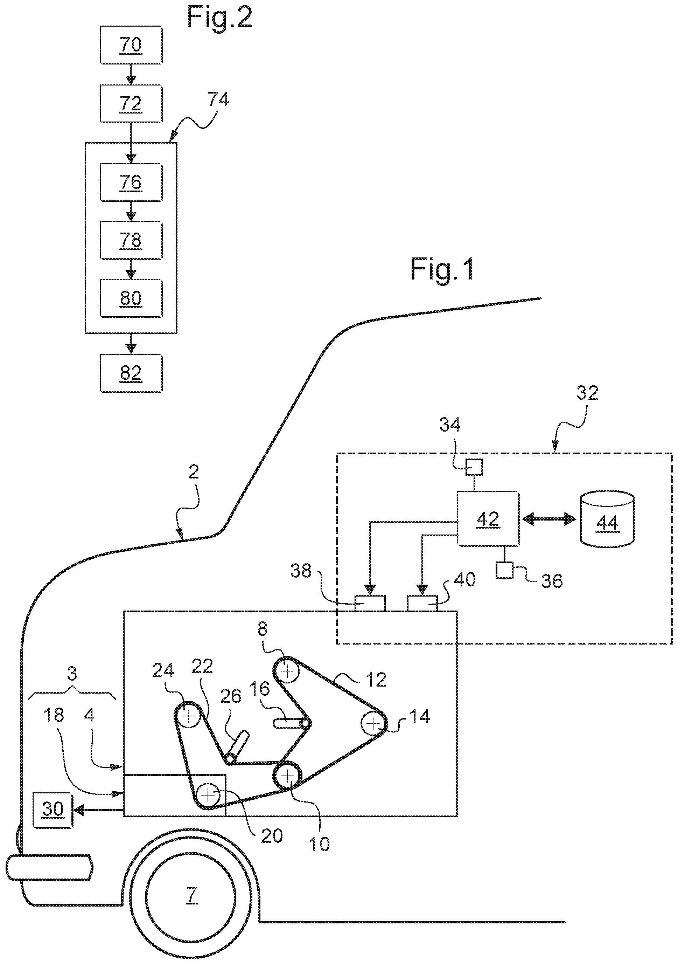

La figure 1 représente un véhicule hybride 2. Par exemple, le véhicule 2 est un véhicule automobile tel qu'une voiture. Ici, le véhicule 2 intègre une technologie de type « Stop and Start ».

Le véhicule 2 comporte un groupe motopropulseur 3 pour entraîner en rotation un arbre d'entraînement des roues motrices 7. Afin de simplifier la figure 1 seule une roue motrice est représentée.

Le groupe motopropulseur 3 comprend un moteur thermique 4. Par exemple, le moteur thermique 4 est un moteur de type Diesel.

De façon connue en soi, le moteur thermique 4 comporte un arbre à cames 8 apte à déplacer les soupapes du moteur. L'arbre à cames 8 est accouplé en rotation avec un arbre de sortie de vilebrequin 10 par l'intermédiaire d'une courroie de distribution 12.

Lors du fonctionnement du moteur thermique 4, l'arbre 10 de sortie de vilebrequin entraine également en rotation l'arbre d'entrainement des roues motrices 7 par le biais d'une chaine de transmission. Typiquement, la chaîne de transmission comprend un embrayage et une boîte de vitesse. Afin de simplifier la figure 1, ces derniers éléments ne sont pas représentés.

Dans l'exemple, la courroie de distribution 12 forme une boucle autour de trois pignons disposés respectivement, à une extrémité de l'arbre à cames 8, à une extrémité de l'arbre 10 de sortie de vilebrequin, et à une extrémité d'un arbre 14 d'une pompe à eau. La courroie de distribution 12 est par exemple une courroie crantée. Ici, la section transversale de cette courroie est trapézoïdale.

Le moteur thermique 4 comporte avantageusement un tendeur 16 permettant de garantir une tension minimale de la courroie de distribution 12. Le tendeur 16 permet de limiter un glissement de la courroie de distribution 22 lors de l'application d'un couple sur l'un des pignons des arbres 8, 10, et 14. Ici, le tendeur 16 est fixé sur le bloc moteur ou tout autre composant fixé sur le moteur.

Le groupe motopropulseur 3 comprend par ailleurs une machine électrique 18. Cette machine électrique 18 comprend un démarreur et un alternateur pour la mise en œuvre d'un démarrage initial et d'un démarrage assisté du véhicule 2.

De façon connue, l'alternateur comportent un arbre 20 de sortie. Cet arbre 20 de sortie d'alternateur est accouplé en rotation avec l'arbre 10 de sortie de vilebrequin par le biais d'une courroie d'accessoires 22. Dans ces conditions, lors d'un démarrage assisté du véhicule 2, une rotation de l'arbre 20 de sortie d'alternateur entraîne en rotation l'arbre 10 de sortie de vilebrequin. En conséquence, l'arbre 10 est entraîné en rotation jusqu'à un régime prédéterminé.

Dans l'exemple, la courroie d'accessoires 22 forme une boucle autour de trois poulies disposées, respectivement, à une extrémité de l'arbre 10 de sortie de vilebrequin, à une extrémité de l'arbre 20 de sortie d'alternateur, et à une extrémité d'un arbre 24 d'une pompe de direction assistée. La courroie d'accessoires 22 est ici une courroie plate.

La machine 18 comporte avantageusement un tendeur 26 permettant de garantir une tension minimale de la courroie d'accessoires 22. Le tendeur 26 permet de limiter un glissement de la courroie d'accessoires 22 lors de l'application d'un couple sur l'une des poulies des arbres 10, 20 et 24.

Le véhicule 2 comporte également une batterie 30 alimentant la machine électrique 18. A cet effet, la machine électrique 18 et la batterie 30 sont électriquement raccordés l'un à l'autre. Typiquement, la tension nominale de cette batterie est de 12V.

Le véhicule 2 comporte également un ensemble 32 de détection d'un glissement de la courroie d'accessoires 22.

L'ensemble 32 comprend des capteurs 34, 36 pour mesurer respectivement le régime du moteur thermique 4 et le régime de l'alternateur. Dans cet exemple, le capteur 34 mesure le régime du moteur thermique 4 avec une période d'échantillonnage égale à 1ms. Toujours, dans l'exemple, le capteur 36 mesure le régime de l'alternateur avec une période d'échantillonnage égale à 80ms.

L'ensemble 32 comprend également :
- un actionneur 38 pour commander une injection de carburant dans les chambres de combustion du moteur thermique 4, et
- un actionneur 40 pour ouvrir, et en alternance, fermer une arrivée d'air d'admission dans ces chambres.

L'ensemble 32 comporte enfin une unité de commande 42 apte à :
- acquérir les mesures issues des capteurs 34, 36,
- traiter ces mesures, et
- commander les actionneurs 38, 40 en fonction d'un résultat de ce traitement.

A cet effet, l'unité 42 est électriquement raccordée aux actionneurs 38, 40 et aux capteurs 34, 36.

Dans cet exemple, l'unité de commande 42 est réalisée à partir d'un calculateur électronique programmable apte à exécuter des instructions enregistrées sur un support d'enregistrement d'informations. A cet effet, l'unité 42 est ici raccordée à une mémoire 44 contenant des instructions pour l'exécution du procédé de la figure 2.

Un procédé de commande de l'arrêt du moteur thermique 4 va maintenant être décrit en référence à la figure 2.

Lors d'une étape 70, un conducteur commande l'arrêt du véhicule 2. Par « arrêt du véhicule 2 » on désigne l'immobilisation du véhicule 2 et non pas l'arrêt du moteur thermique 4. Par exemple, le conducteur actionne une pédale de frein pour s'arrêter à un feux tricolore.

Lors d'une étape 72, l'unité 42 commande les actionneurs 38, 40 pour mettre en œuvre une phase de préparation d'un arrêt du moteur thermique 4. A cet effet, l'unité 42 commande l'actionneur 40 pour fermer l'admission d'air dans les chambres de combustion du moteur thermique 4. Par ailleurs, l'unité 42 commande l'actionneur 38 pour maintenir l'injection de carburant dans les cylindres.

Dans ces conditions, la rotation de l'arbre 10 de vilebrequin se poursuit, cycle après cycle, tant que de l'oxygène est présent dans les cylindres du moteur thermique 4. Dans cette description, on désigne par « cycle du moteur thermique » une alternance d'une compression et d'une détente des gaz de combustion.

A chaque cycle du moteur thermique, la quantité d'oxygène diminue. En effet, celle-ci est consommée lors de chaque explosion. La pression dans les chambres chute. Ainsi, à chaque cycle, l'accélération des pistons dans le cylindre lors de la détente diminue. De fait, les acyclismes du moteur diminue également lors de cette phase de préparation de l'arrêt du moteur thermique.

La phase de préparation de l'arrêt du moteur thermique présente ainsi le double avantage d'offrir un régime moteur constant (peu d'acyclisme) et faible (inférieur à 1000 tours par minute). Typiquement, durant la phase de préparation le régime du moteur est stabilisé autour d'une valeur comprise entre 700 et 800 tours/min. Aussi, durant cette phase le couple de l'alternateur est suffisamment important pour qu'un glissement de la courroie d'accessoires 22 soit provoqué si celle-ci est humide.

Profitant de ces conditions optimales pour détecter un glissement de la courroie d'accessoire, un procédé de détection d'un glissement de la courroie est mis en œuvre pendant la phase de préparation d'arrêt moteur, lors d'une étape 74.

Cette étape 74 comprend une opération 76 lors de laquelle l'unité 42 acquière des mesures des régimes du moteur thermique 4 et de l'alternateur par l'intermédiaire des capteurs 34, 36.

Lors d'une opération 78, l'unité 42 compare les mesures acquises. Par exemple, lors de cette opération 78, l'unité 42 calcule la valeur absolue Va de la différence de ces mesures (dans l'exemple les diamètres des poulies de l'arbre de sortie de vilebrequin et de l'arbre de sortie d'alternateur sont égaux).

Lors d'une opération 80, l'unité 42 détecte le glissement de la courroie d'accessoires 22 à partir d'un résultat de la comparaison de l'étape 78. Typiquement, si la valeur Va est supérieure à un seuil prédéterminé lors de la mise au point du groupe motopropulseur 3, alors l'unité 42 détecte un glissement de la courroie d'accessoires 22. Sinon, l'unité 42 ne détecte pas de glissement de la courroie d'accessoires 22.

Lors d'une étape 82, l'unité 42 commande le moteur thermique 4 en fonction d'un résultat de l'étape 74.

Si un glissement de la courroie d'accessoires 22 est détecté, la courroie d'accessoires 22 est à priori humide. Dans ce cas, il est probable que si le moteur est mis à l'arrêt, le redémarrage du véhicule sous la forme d'un démarrage assisté du véhicule 2 soit un échec. En conséquence, dans ce cas, par précaution, l'arrêt du moteur thermique est inhibé.

Si aucun glissement de la courroie d'accessoires 22 n'est détecté, la courroie d'accessoires n'est à priori pas humide. Dans ce cas, il est probable que si le moteur est mis à l'arrêt, le redémarrage du véhicule sous la forme d'un démarrage assisté du véhicule soit un succès. En conséquence, dans ce cas, l'arrêt du moteur thermique est commandé. La commande de l'arrêt du moteur thermique consiste, par exemple, à arrêter l'injection de carburant dans les chambres de combustion.

Avantageusement, le procédé de la figure 2 est répété avant chaque arrêt du moteur thermique 4.

De nombreux modes de réalisation sont possibles.

Le moteur thermique n'est pas nécessairement un moteur Diesel. Il peut s'agir par exemple d'un moteur à allumage commandé (moteur de type essence).

Le procédé de commande de l'arrêt du moteur thermique 4 peut être mis en œuvre avec un procédé de détection d'un glissement de la courroie d'accessoire distinct du procédé décrit dans la phase 72.

Le véhicule n'est pas nécessairement un véhicule Stop and start. Il peut s'agir de tout autre type de véhicule hybride.

## Revendications

1. Procédé de détection d'un glissement d'une courroie d'accessoires accouplant en rotation un arbre de sortie d'un vilebrequin d'un moteur thermique avec un arbre de sortie d'un alternateur, ce procédé comportant :
a) la détermination (76) d'un régime du moteur et d'un régime de l'alternateur,
b) la comparaison (78) des régimes déterminés du moteur et de l'alternateur, et
c) la détection (80) du glissement de la courroie d'accessoires en fonction d'un résultat de cette comparaison,
**caractérisé en ce que**, les étapes a), b) et c) sont réalisées lors d'une phase de préparation d'un arrêt (72) du moteur thermique pendant laquelle l'injection de carburant dans des chambres de combustion est maintenue tout en fermant l'arrivée d'air d'admission dans ces chambres.

2. Procédé selon la revendication 1, dans lequel le procédé est répété systématiquement avant chaque arrêt du véhicule.

3. Procédé de commande de l'arrêt d'un moteur thermique, **caractérisé en ce que** ce procédé comporte :
- un procédé de détection (74) conforme à l'une quelconque des revendications 1 à 2, et
- si un glissement de la courroie d'accessoires est détecté alors l'arrêt du moteur thermique n'est pas commandé (82), et
- si un glissement de la courroie d'accessoires n'est pas détecté alors l'arrêt du moteur thermique est commandé (82).

4. Ensemble (32) pour la détection d'un glissement d'une courroie d'accessoires (22) accouplant en rotation un arbre (10) de sortie d'un vilebrequin d'un moteur thermique et un arbre (20) de sortie d'un alternateur, cet ensemble comportant :
- des capteurs (34, 36) pour mesurer ou estimer le régime du moteur et le régime de l'alternateur, et
- un calculateur (42) programmé pour:
b) comparer le régime du moteur et le régime de l'alternateur mesurés ou estimés par les capteurs, et
c) détecter le glissement de la courroie d'accessoires en fonction d'un résultat de cette comparaison,
**caractérisé en ce que** le calculateur est programmé pour mettre en œuvre les étapes b) et c) lors d'une phase de préparation d'un arrêt du moteur thermique pendant laquelle l'injection de carburant dans des chambres de combustion est maintenue tout en fermant l'arrivée d'air d'admission dans ces chambres.

5. Véhicule (2), **caractérisé en ce qu'**il est équipé d'un ensemble conforme à la revendication 4.

## Patentansprüche

1. Verfahren zum Erkennen eines Durchrutschens eines Aggregate-Antriebsriemens, der eine Ausgangswelle einer Kurbelwelle einer Brennkraftmaschine mit einer Ausgangswelle einer Lichtmaschine in Drehung koppelt, wobei das Verfahren Folgendes umfasst:
a) das Bestimmen (76) einer Drehzahl des Motors und einer Drehzahl der Lichtmaschine,
b) das Vergleichen (78) der bestimmten Drehzahlen des Motors und der Lichtmaschine, und
c) das Erkennen (80) des Durchrutschens des Aggregate-Antriebsriemens in Abhängigkeit von einem Resultat dieses Vergleichs,
**dadurch gekennzeichnet, dass** die Schritte a), b) und c) während einer Vorbereitungsphase eines Stoppens (72) der Brennkraftmaschine ausgeführt werden, während der das Einspritzen von Kraftstoff in die Brennkammern aufrechterhalten wird, während die Ansaugluftzufuhr in diese Kammern geschlossen gehalten wird.

2. Verfahren nach Anspruch 1, wobei das Verfahren systematisch vor jedem Stoppen des Fahrzeugs wiederholt wird.

3. Verfahren zum Steuern des Stoppens einer Brennkraftmaschine, **dadurch gekennzeichnet, dass** dieses Verfahren Folgendes umfasst:
- ein Erkennungsverfahren (74) nach einem der Ansprüche 1 bis 2, und
- falls ein Durchrutschen des Aggregate-Antriebsriemens erkannt wird, wird das Stoppen der Brennkraftmaschine nicht befohlen (82), und
- falls ein Durchrutschen des Aggregate-Antriebsriemens nicht erfasst wird, wird das Stoppen der Brennkraftmaschine befohlen (82).

4. Einheit (32) für das Erkennen eines Durchrutschens eines Aggregate-Antriebsriemens (22), der eine Ausgangswelle (10) einer Kurbelwelle einer Brennkraftmaschine und eine Ausgangswelle (20) einer Lichtmaschine in Drehung koppelt, wobei diese Einheit Folgendes umfasst:
- Sensoren (34, 36) für das Messen oder Schätzen der Drehzahl des Motors und der Drehzahl der Lichtmaschine, und
- einen Rechner (42), der programmiert ist, um:
b) die die Drehzahl des Motors mit der Drehzahl der Lichtmaschine, die von den Sensoren gemessen oder geschätzt werden, zu vergleichen,
c) das Durchrutschen des Aggregate-Antriebsriemens in Abhängigkeit von einem Resultat dieses Vergleichs zu erkennen,
**dadurch gekennzeichnet, dass** der Rechner programmiert ist, um die Schritte b) und c) bei einer Vorbereitungsphase eines Stoppens der Brennkraftmaschine, während der das Einspritzen von Kraftstoff in die Brennkammern aufrechterhalten wird, während die Ansaugluftzufuhr in den Kammern geschlossen wird, umzusetzen.

5. Fahrzeug (2), **dadurch gekennzeichnet, dass** es mit einer Einheit nach Anspruch 4 ausgestattet ist.

## Claims

1. A method for detecting the slipping of an accessory belt coupling in rotation an output shaft of a crankshaft of a heat engine with an output shaft of an alternator, this method comprising:
a) the determining (76) of a speed of the engine and a speed of the alternator, and
b) the comparing (78) of the determined speeds of the engine and of the alternator, and
c) the detecting (80) of the slipping of the accessory belt as a function of a result of this comparison,
**characterized in that** the steps a), b) and c) are realized during a preparation phase of a stop (72) of the heat engine, during which the injection of fuel in the combustion chambers is maintained whilst closing the arrival of intake air in these chambers.

2. The method according to Claim 1, in which the method is repeated systematically before each stop of the vehicle.

3. A method for controlling the stop of a heat engine, **characterized in that** this method comprises:
- a method of detection (74) according to any one of Claims 1 to 2, and
- if a slipping of the accessory belt is detected, then the stop of the heat engine is not controlled (82), and
- if a slipping of the accessory belt is not detected then the stop of the heat engine is controlled (82).

4. An assembly (32) for the detection of a slipping of an accessory belt (22) coupling in rotation an output shaft (10) of a crankshaft of a heat engine and an output shaft (20) of an alternator, this assembly comprising:
- sensors (34, 36) for measuring or estimating the speed of the engine and the speed of the alternator, and
- a computer (42) programmed for:
b) comparing the speed of the engine and the speed of the alternator measured or estimated by the sensors, and
c) detecting the slipping of the accessory belt as a function of a result of this comparison,
**characterized in that** the computer is programmed for implementing the steps b) and c) during a preparation phase of a stop of the heat engine during which the injection of fuel in the combustion chambers is maintained whilst closing the arrival of intake air in these chambers.

5. A vehicle (2), **characterized in that** it is equipped with an assembly according to Claim 4.
